# EUROPEAN PATENT APPLICATION

(11) **EP 4 601 059 A1**
(43) Date of publication of application: **13.08.2025**
(21) Application number: 23884881.6
(22) Date of filing: 30.10.2023
(51) Int. Cl.: H01M 10/052, H01M 10/0587, H01M 4/38, H01M 4/66

(54) **CYLINDRICAL LITHIUM METAL SECONDARY BATTERY**

(30) Priority: 04.11.2022 CN 202211379585; 04.11.2022 CN 202222962861 U
(71) Applicant: EnPower (Peking) Inc., Beijing 102600 (CN)
(72) Inventor: LIU, Xiao, Beijing 102600 (CN); HUANG, Fei, Beijing 102600 (CN); CHE, Yong, Beijing 102600 (CN); DAI, Xiang, Beijing 102600 (CN)
(74) Representative: Monteiro Alves, Inês
(86) International application number: PCT/CN2023/127975
(87) International publication number: WO 2024/093951

(57) **Abstract**

A cylindrical lithium metal secondary battery, comprising: a casing, a battery cell electrode set arranged in the casing, and an electrolyte filling the housing. The battery cell electrode set comprises a wound electrode set and tabs arranged on the wound electrode set; the wound electrode set is formed by winding a positive electrode, a negative electrode, and a separator; the negative electrode is a metal lithium sheet; the metal lithium sheet serves as a negative electrode current collector and a negative electrode active material. According to the cylindrical lithium metal secondary battery, a metal lithium sheet is used as a negative electrode and the metal lithium sheet has the functions of both an active material and a current collector, so that a common copper current collector is no longer needed, the thickness of the separator of the wound electrode set is greatly reduced, and the energy density of the battery is greatly improved. Additionally, by using a cylindrical battery structure, stable charge and discharge cycles are achieved without applying an external pressure.

## Description

### CROSS-REFERENCE TO RELATED APPLICATIONS

The present invention claims the priority to the Chinese patent application with the filing number 202211379585.3 filed with the China National Intellectual Property Administration on November 4, 2022 and entitled "CYLINDRICAL LITHIUM METAL SECONDARY BATTERY", and the priority to the Chinese patent application with the filing number 202222962861.0 filed with the China National Intellectual Property Administration on November 4, 2022 and entitled "CYLINDRICAL LITHIUM METAL SECONDARY BATTERY", the contents of which are incorporated herein by reference in entirety.

### TECHNICAL FIELD

The present invention relates to the technical field of lithium batteries, and particularly to a cylindrical lithium metal secondary battery.

### BACKGROUND ART

The lithium ion battery utilizes a concentration difference of lithium ions to store and discharge energy, and no metal lithium exists in the battery. While the lithium metal battery uses metal lithium as an electrode, and generates electric energy through corrosion or oxidation of metal lithium. Because metal lithium has an extremely high theoretical specific capacity, the most negative reduction potential and an extremely small density, the energy density of the lithium metal battery is much greater than that of other battery systems. Currently, lithium metal batteries are primarily disposable batteries, which are discarded after use and cannot be charged, and thus they are also called as primary batteries. The lithium metal secondary battery is a rechargeable lithium battery that takes lithium metal as a negative electrode, and according to different positive electrode materials, there are multiple types of lithium metal secondary batteries.

The secondary lithium metal batteries are mostly pouch batteries, which, however, need to operate under a pressure provided by an external fixture because of a volume expansion issue of metal lithium, thus bringing great inconvenience to testing and usage of the batteries.

### SUMMARY

The present invention provides a cylindrical lithium metal secondary battery, so as to solve technical problems such as high complexity, low safety, and low energy density existing in the lithium metal secondary batteries in related art.

The present invention adopts the following technical solutions to solve the above technical problems.

Provided is a cylindrical lithium metal secondary battery, where the cylindrical lithium metal secondary battery may include: a case, a jelly roll provided in the case and an electrolyte filled in the case, where
the jelly roll includes a wound electrode assembly and tabs provided on the wound electrode assembly;
the wound electrode assembly is formed by winding a positive electrode, a negative electrode and a separator; and
the negative electrode is a metal lithium sheet, where the metal lithium sheet acts as a negative electrode current collector and a negative electrode active material.

In the cylindrical lithium metal secondary battery of the present invention, the metal lithium sheet is taken as the negative electrode and has functions of both an active material and a current collector, so that a common copper current collector is omitted, an inter-separator thickness of the wound electrode assembly is greatly reduced, and the energy density of the battery is greatly improved. Moreover, by using a cylindrical battery structure, stable charge and discharge cycles are realized without applying an external pressure.

In an embodiment of the present invention, an assembling coefficient of the cylindrical lithium metal secondary battery may be 88.5%-93.2%.

By adopting a certain assembling coefficient, the stability of the charge and discharge cycles of the cylindrical lithium metal secondary battery is further improved without applying an external pressure, the testing and operating environments of the battery can be simplified, and the operating costs of the battery can be reduced, etc.

In an embodiment of the present invention, a material of the case may be steel.

The case made of a steel material has a relatively hard texture and relatively high mechanical strength, and can provide a pressure required for operation of the cylindrical metal secondary battery through coordination with a corresponding assembling coefficient, eliminating the requirement for an additional means for providing a pressure.

In an embodiment of the present invention, a thickness of the metal lithium sheet is ≤ 50 µm.

In the present invention, an ultrathin metal lithium sheet is taken as the negative electrode, which not only omits an additional current collector, but also greatly reduces an inter-separator thickness of the wound electrode assembly, thus greatly improving the energy density of the battery.

In an embodiment of the present invention, the tabs may include a positive electrode tab and a negative electrode tab, where the positive electrode tab and the negative electrode tab are connected to the positive electrode and the negative electrode, respectively.

In an embodiment of the present invention, the positive electrode tab may be an aluminum strip, and the negative electrode tab may be a nickel strip.

In an embodiment of the present invention, the positive electrode may include a positive electrode current collector and a positive electrode active material layer provided on a surface of the positive electrode current collector. Optionally, a material of the positive electrode active material layer may be formed by mixing an active material, a conductive agent and a binder.

In an embodiment of the present invention, a surface density of the positive electrode active material layer is < 40 mg/cm².

In an embodiment of the present invention, the positive electrode current collector may be an aluminum foil.

In an embodiment of the present invention, the positive electrode active material may include any one of lithium cobalt oxide, a ternary material and a lithium iron phosphate material.

In an embodiment of the present invention, the cylindrical lithium metal secondary battery is any one of 18650 cylindrical battery, 14500 cylindrical battery and 21700 cylindrical battery. Optionally, for the 18650 cylindrical battery, weight energy density thereof is ≥ 380 Wh/kg, volumetric energy density is ≥ 850 Wh/L; and capacity is > 4000 mAh.

In an embodiment of the present invention, the positive electrode tab and the negative electrode tab may be provided with a high-temperature adhesive tape.

In an embodiment of the present invention, the cylindrical lithium metal secondary battery further may include a cap, where the cap is provided above the case.

In an embodiment of the present invention, the positive electrode tab may be welded to the cap; and the negative electrode tab may be welded to an inner bottom of the case.

In an embodiment of the present invention, the separator may be a porous polymer separator. Optionally, a thickness of the separator may be 20-25 µm.

In an embodiment of the present invention, the electrolyte may be a liquid organic electrolyte.

In an embodiment of the present invention, the jelly roll may be provided with an upper insulation spacer and a lower insulation spacer in a top portion and a bottom portion, respectively. Optionally, the upper insulation spacer and the lower insulation spacer may be respectively provided with a strip-shaped hole through which the positive electrode tab and the negative electrode tab penetrate.

Compared with the related art, beneficial effects of the present invention at least may include the following.

Compared with the lithium metal primary battery, the cylindrical lithium metal secondary battery of the present invention can be charged and discharged multiple times, has a higher load voltage, and is more advantageous in resource utilization and environmental protection. Compared with the pouch secondary lithium metal battery, the lithium metal secondary battery of the present invention can provide necessary pressure by itself, and an external pressure means can be omitted, thus simplifying the testing and operating environments of the battery, and reducing the operating cost of the battery, etc. At the same time, as the ultrathin metal lithium sheet is used as the active material and the current collector, other common negative electrode current collectors are omitted. Consequently, the lithium metal secondary battery has excellent capacity and energy density.

### BRIEF DESCRIPTION OF DRAWINGS

In order to more clearly illustrate technical solutions in embodiments of the present invention or in the related art, drawings which need to be used in the description of the embodiments or the related art will be introduced briefly below. Apparently, the drawings in the following description are merely for some embodiments of the present invention, and those ordinarily skilled in the art still could obtain other drawings in light of these drawings without using any inventive efforts.
FIG. 1 is a structural schematic diagram of a cylindrical lithium metal secondary battery provided in embodiments of the present invention.
FIG. 2 is a structural schematic diagram of a jelly roll provided in embodiments of the present invention.
FIG. 3 is a partial cross-sectional structural schematic diagram of the jelly roll provided in embodiments of the present invention.
FIG. 4 shows charge and discharge curves of an 18650 cylindrical lithium metal secondary battery provided in Example 1 of the present invention.
FIG. 5 is a graph of discharge capacity-number of cycles of the 18650 cylindrical lithium metal secondary battery in Example 1 of the present invention.
FIG. 6 is a graph of discharge capacity-number of cycles of the 18650 cylindrical lithium metal secondary battery in Example 2 of the present invention.
FIG. 7 is a graph of discharge capacity-number of cycles of the 18650 cylindrical lithium metal secondary battery in Example 3 of the present invention.

Reference signs:
1-case; 2-jelly roll; 3-cap;
21-positive electrode; 22-negative electrode; 23-separator;
24-positive electrode tab; 25-high-temperature adhesive tape; 26-upper insulation spacer;
27-lower insulation spacer; 211-positive electrode current collector; 212-positive electrode active material layer.

### DETAILED DESCRIPTION OF EMBODIMENTS

Technical solutions of the present invention will be described clearly and completely below in conjunction with drawings and embodiments, while those skilled in the art would understand that examples described below are some but not all examples of the present invention, and they are merely used for illustrating the present invention, but should not be considered as limiting the scope of the present invention. Based on the examples in the present invention, all of other examples obtained by those ordinarily skilled in the art without using any inventive efforts shall fall within the scope of protection of the present invention. Examples, for which no concrete conditions are specified, are carried out according to conventional conditions or conditions recommended by manufactures. If manufacturers of reagents or apparatuses used are not specified, all of them are conventional products commercially available.

In the description of the present invention, it should be noted orientation or positional relationships indicated by the terms such as "center", "upper", "lower", "left", "right", "vertical", "horizontal", "inner", and "outer" are based on orientation or positional relationships as shown in the drawings, merely for facilitating the description of the present invention and simplifying the description, rather than indicating or implying that related devices or elements have to be in the specific orientation, or configured or operated in a specific orientation, therefore, they should not be construed as limitations on the present invention. Besides, the terms "first", "second", and "third" are merely for descriptive purpose, but should not be construed as indicating or implying importance in the relativity.

In the description of the present invention, it should be noted that unless otherwise specified and defined clearly, the terms "mount", "join", and "connect" should be understood in a broad sense, for example, a connection may be a fixed connection, a detachable connection, or an integrated connection; it may be a mechanical connection or an electrical connection; it may be a direct connection or an indirect connection through an intermediary, and it also may be an inner communication between two elements. The specific meanings of the above-mentioned terms in the present invention could be understood by those ordinarily skilled in the art according to specific situations.

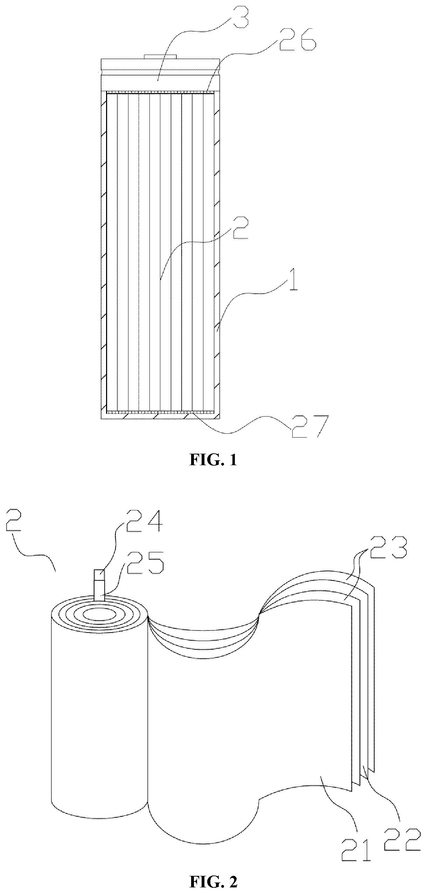

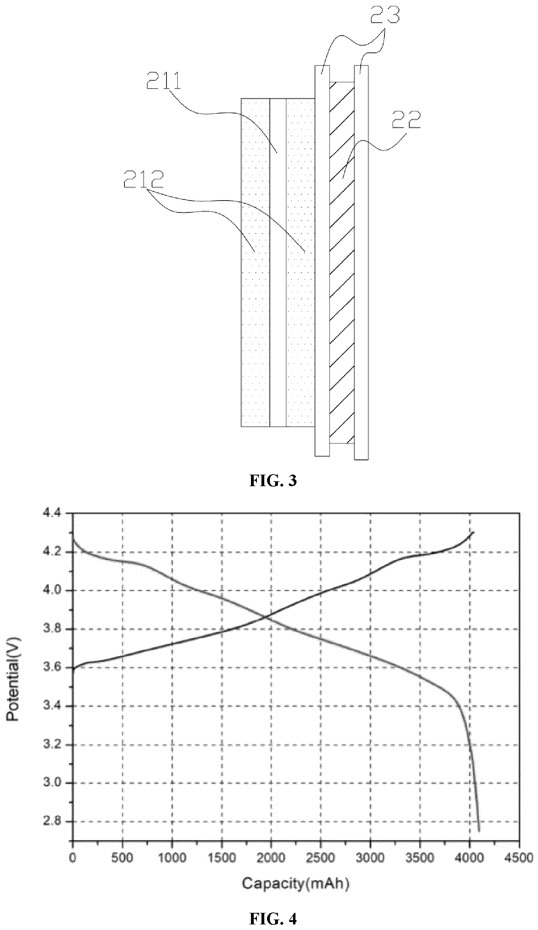

FIG. 1 is a structural schematic diagram of a cylindrical lithium metal secondary battery provided in embodiments of the present invention; FIG. 2 is a structural schematic diagram of a jelly roll provided in embodiments of the present invention; and FIG. 3 is a partial cross-sectional structural schematic diagram of the jelly roll provided in embodiments of the present invention. As shown in FIG. 1, FIG. 2 and FIG. 3, the cylindrical lithium metal secondary battery provided by the present embodiment may include:
a case 1, a jelly roll 2 provided in the case 1 and an electrolyte filled in the case 1, where
the jelly roll 2 may include a wound electrode assembly and tabs provided on the wound electrode assembly;
the wound electrode assembly can be formed by winding a positive electrode 21, a negative electrode 22 and a separator 23; and
the negative electrode 22 can be a metal lithium sheet, where the metal lithium sheet acted as a negative electrode current collector and a negative electrode active material.

The battery taking the metal lithium sheet as the negative electrode has a quite high energy density, while as battery charge and discharge cycles proceed, the lithium negative electrode will expand, resulting in an increased thickness thereof and rapid decay of battery performance. Therefore, an external pressure is required to assist operation of the battery. However, an aluminum plastic film of a pouch battery is relatively soft, and provides a too small constraint; and then an additional fixture is required to provide necessary pressure, thus complicating testing or usage procedures of the battery.

In the cylindrical lithium metal secondary battery of the present invention, the metal lithium sheet is taken as the negative electrode and has functions of both an active material and a current collector, so that a common copper current collector is omitted, an inter-separator thickness of the wound electrode assembly is greatly reduced, and the energy density of the battery is greatly improved. Moreover, by using a cylindrical battery structure, stable charge and discharge cycles are realized without applying an external pressure.

Optionally, the case 1 may have at least one open end. The case 1 may further include: a cap 3 provided at the open end of the case 1.

Optionally, an assembling coefficient of the cylindrical lithium metal secondary battery may be 88.5%-93.2%.

For example, in different embodiments, the assembling coefficient of the cylindrical lithium metal secondary battery may be 88.5%, 89.5%, 90%, 90.5%, 91.5%, 92.5%, and 93.2%, etc.

By adopting the above assembling coefficient, the stability of the charge and discharge cycles of the cylindrical lithium metal secondary battery is further improved without applying an external pressure, the testing and operating environments of the battery can be simplified, and the operating costs of the battery can be reduced, etc. Moreover, the capacity, energy density, and the like of the cylindrical lithium metal secondary battery are ensured.

In practical operations, the assembling coefficient is adjusted by regulating a loading amount, a thickness and a length of a positive electrode active material layer 212 of the positive electrode 21, a thickness and a length of the negative electrode 22, and a thickness and a length of the separator 23. For example, when the thicknesses of the electrode sheets are fixed, the assembling coefficient can be regulated by regulating the lengths of the electrode sheets, and vice versa. Specifically, a calculation formula of the assembling coefficient is: assembling coefficient = cross-sectional area of jelly roll/ inner cross-sectional area of case.

Optionally, a material of the case 1 may be steel. The case 1 made of a steel material has a relatively hard texture and relatively high mechanical strength, and can provide a pressure required for operation of the cylindrical metal secondary battery, eliminating the requirement for an additional means for providing a pressure.

Herein, the jelly roll 2 may be a cylindrical jelly roll; and the case 1 may be a cylindrical case.

Optionally, a side-wall thickness of the case 1 may adopt a thickness of a case of a conventional cylindrical battery.

In practical operations, the positive electrode 21 and the negative electrode 22 are separated by the separator 23 and they are wound to form the wound electrode assembly. For example, the wound electrode assembly can be formed by sequentially stacking and winding the positive electrode 21, the separator 23, the negative electrode 22 and the separator 23.

Optionally, a thickness of the metal lithium sheet may be ≤ 50 µm. For example, in different embodiments, the thickness of the metal lithium sheet may be 20 µm, 25 µm, 30 µm, 35 µm, 40 µm, 45 µm, 50 µm, etc., but is not limited thereto.

By using the lithium sheet with the above thickness, in conjunction with a corresponding assembling coefficient and the steel case, the pressure provided by the steel case of the battery can be regulated, thus ensuring the stability during charge and discharge operations, and ensuring processability of the wound electrode assembly.

Optionally, the positive electrode 21 may include a positive electrode current collector 211 and a positive electrode active material layer 212 provided on a surface of the positive electrode current collector 211. For example, the positive electrode current collector 211 may be an aluminum foil.

Optionally, a material of the positive electrode active material layer 212 may be formed by mixing an active material, a conductive agent and a binder.

In practical operations, the positive electrode active material layer 212 can be formed by coating the positive electrode material on the surface of the positive electrode current collector 211 and drying the same. Herein, the active material can be compounded according to composition thereof. The active material may include any one of lithium cobalt oxide, a ternary material and a lithium iron phosphate material. The ternary material is, for example, a high-nickel ternary material. The conductive agent may include any one of carbon black, conductive graphite, carbon nanotubes and carbon fibres. The binder may be any one of polyvinylidene fluoride, polyamide resin and sodium carboxymethyl cellulose.

The present invention does not limit the material of the positive electrode active material layer, as long as the positive electrode active material can cooperate with the lithium metal negative electrode to form the lithium metal secondary battery.

Optionally, a surface density of the positive electrode active material layer 212 may be < 40 mg/cm². For example, in different embodiments, the surface density of the positive electrode active material layer 212 may be 38 mg/cm², 35 mg/cm², 32 mg/cm², 30 mg/cm², 25 mg/cm², 20 mg/cm², 15 mg/cm², etc., but is not limited thereto.

The present invention, by adopting the positive electrode active material layer 212 with a certain surface density and the metal lithium sheet with a certain thickness in combination, can ensure the strength of the case 1 made of steel to support the pressure required for the operation of the cylindrical metal secondary battery, and ensure the stability and safety of the operation of the battery.

Optionally, the cylindrical lithium metal secondary battery may be any one of 18650 cylindrical battery, 14500 cylindrical battery and 21700 cylindrical battery. For the 18650 cylinder battery, its weight energy density is ≥ 380 Wh/kg, volumetric energy density is ≥ 850 Wh/L; and capacity is > 4000 mAh.

Optionally, the tabs may include a positive electrode tab 24 and a negative electrode tab (not shown), and the positive electrode tab 24 and the negative electrode tab can be connected to the positive electrode 21 and the negative electrode 22, respectively.

For example, in practical operations, in order to ensure stability of respective connection of the positive electrode tab 24 and the negative electrode tab to the positive electrode 21 and the negative electrode 22, the positive electrode tab 24 and the negative electrode tab can be welded to the positive electrode 21 and the negative electrode 22 respectively.

Optionally, the positive electrode tab 24 may be an aluminum strip, and the negative electrode tab may be a nickel strip.

In practical operations, sizes of the positive electrode tab 24 and the negative electrode tab can be adjusted according to actual requirements.

Optionally, a high-temperature adhesive tape 25 can be provided on the positive electrode tab 24 and the negative electrode tab. The high-temperature adhesive tape 25 can be wound around the positive electrode tab 24 and the negative electrode tab, respectively.

Optionally, the positive electrode tab 24 can be welded to the cap 3; and the negative electrode tab can be welded to an inner bottom of the case 1 made of steel.

Optionally, the separator 23 may be a porous polymer separator. A material of the separator 23 may be a PP/PE/PP composite film or the like.

Optionally, a thickness of the separator may be 20-25 µm, which may be, for example, 20 µm, 21 µm, 22 µm, 23 µm, 24 µm, 25 µm, etc.

Optionally, the electrolyte may be a liquid organic electrolyte. The electrolyte may be a carbonate-based electrolyte, or the like.

Optionally, the jelly roll 2 may be provided with an upper insulation spacer 26 and a lower insulation spacer 27 in a top portion and a bottom portion, respectively. Optionally, the upper insulation spacer 26 and the lower insulation spacer 27 may be respectively provided with a strip-shaped hole through which the positive electrode tab 24 and the negative electrode tab penetrate.

In addition, in order to ensure sealing performance of the cylindrical lithium metal secondary battery, a sealing ring can be provided on the case 1 or the cap 3, and a buckle or a groove can also be respectively provided on the case 1 or the cap 3, thus enabling better sealing performance between the case 1 and the cap 3.

Compared with the lithium metal primary battery, the cylindrical lithium metal secondary battery provided by the present embodiment can be charged and discharged multiple times, has a higher load voltage, and is more advantageous in resource utilization and environmental protection. It can provide required pressure by itself, and an external pressure means can be omitted, thus simplifying the testing and operating environments of the battery, and reducing the operating cost of the battery, etc. At the same time, the metal lithium sheet is taken as the negative electrode and has functions of both the active material and the current collector, so that the common copper current collector is omitted, the thickness between the separators of the wound electrode assembly is greatly reduced, and the energy density and capacity of the battery are greatly improved.

Taking the 18650 cylindrical battery as an example, the cylindrical lithium metal secondary battery of the present invention exhibits a nominal voltage increased by 100-200 mV, a battery capacity increased to 4095 mAh, a battery weight reduced by approximately 20%, and a significantly improved weight energy density. The 18650-4.1 Ah battery of the present invention achieves new milestones in capacity, nominal voltage and energy density.

In addition, embodiments of the present invention further provide a method for assembling the cylindrical lithium metal secondary battery, and a specific assembling method may include:
S1: welding a positive electrode 21 with a positive electrode tab 24, and welding a negative electrode 22 with a negative electrode tab;
S2: separating the positive electrode 21 welded with the positive electrode tab 24 and the negative electrode 22 welded with the negative electrode tab by a separator 23, and winding, so as to obtain a jelly roll 2; and
S3: assembling the jelly roll 2 into a case 1 made of steel, and carrying out groove rolling and welding; and injecting an electrolyte, followed by encapsulation, yielding the cylindrical lithium metal secondary battery.

### Example 1

The present example provided an 18650 cylindrical lithium metal secondary battery, including a case, a jelly roll provided in the case and an electrolyte filled in the case, where
the jelly roll included a wound electrode assembly and tabs provided on the wound electrode assembly;
the wound electrode assembly was formed by winding a positive electrode, a negative electrode and a separator; and
the negative electrode was a metal lithium sheet, and the metal lithium sheet acted as a negative electrode current collector and a negative electrode active material.

A preparation method for the above battery included steps as follows:
(1) preparation of a positive electrode sheet: mixing a positive electrode material (NCM811), a binder (PVDF) and a conductive agent (Super-P) in a solvent at a mass ratio of 96:2:2 uniformly, so as to render a slurry, coating the slurry on an aluminum foil at a loading amount of 35 mg/cm², drying the slurry, rolling and slitting the coated aluminum foil, so as to render the positive electrode sheet with a thickness of 120 µm and a length of 950 mm; and welding a positive electrode tab;
(2) preparation of a negative electrode sheet: using a metal lithium sheet with a thickness of 50 µm as a negative electrode, and cutting the metal lithium sheet, so as to obtain a negative electrode sheet with a length of 1000 mm; and attaching a negative electrode tab;
(3) cutting a separator with a length of 1050 mm, where the separator was a PP/PE/PP composite film;
(4) separating the positive and negative electrode sheets with the separator, and winding them to render a jelly roll, where a calculated assembling coefficient of the jelly roll can be 90.5%; and
(5) assembling the above jelly roll into a steel case of the battery, and carrying out steps of groove rolling, welding, electrolyte injection (carbonate-based electrolyte), sealing, etc. so as to produce a complete cylindrical lithium metal secondary battery.

The 18650 cylindrical cell of the present example had a nominal voltage of 3.8 V, a weight of 40 g, a weight energy density of 389 Wh/kg, and a volumetric energy density of 888 Wh/L.

FIG. 4 shows charge and discharge curves of the 18650 cylindrical lithium metal secondary battery provided in Example 1.

### Example 2

Reference is made to Example 1 for the present example, and a difference lies in that the assembling coefficient is different.

In the present example, lengths of the positive electrode sheet and the negative electrode sheet were adjusted, so that the assembling coefficient was 88.5%.

### Example 3

Reference is made to Example 1 for the present example, and a difference lies in that the assembling coefficient is different.

In the present example, lengths of the positive electrode sheet and the negative electrode sheet were adjusted, so that the assembling coefficient was 93.2%.

**Table 1 lists different assembling coefficients and positive electrode lengths, negative electrode lengths and separator lengths adopted for preparing the 18650 cylindrical lithium metal secondary batteries according to Examples 1, 2 and 3.**

| | Positive Electrode Length/mm | Negative Electrode Length/mm | Separator Length/mm | Assembling Coefficient |
|---|---|---|---|---|
| Example 1 | 950 | 1000 | 1050 | 90.5 |
| Example 2 | 930 | 980 | 1020 | 88.5 |
| Example 3 | 980 | 1035 | 1080 | 93.2 |

It can be seen therefrom that in the present invention, the assembling coefficient of the cylindrical lithium metal secondary battery can be adjusted by adjusting the positive electrode length, the negative electrode length and the separator length in different examples.

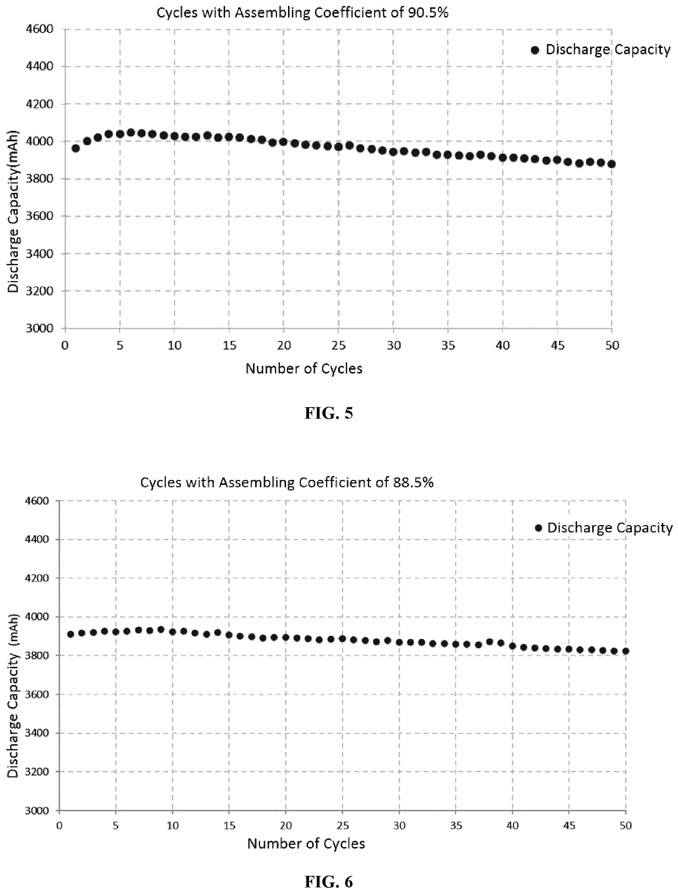

FIG. 5 to FIG. 7 show graphs of discharge capacity-number of cycles of the 18650 cylindrical lithium metal secondary batteries fabricated by the methods according to Example 1, Example 2 and Example 3 of the present invention, respectively.

As shown in FIG. 5, X-axis represents the number of cycles of the cylindrical lithium metal secondary battery, and Y-axis represents the discharge capacity of the cylindrical lithium metal secondary battery. As shown in FIG. 5, the cylindrical lithium metal secondary battery with the assembling coefficient of 90.5% according to Example 1 had a first discharge capacity of 3963 mAh. As the number of cycles increased, the discharge capacity was first slightly increased up to 4047 mAh, and then remained at a relatively stable level. After 50 cycles, the discharge capacity remained at 3879 mAh, still maintaining 97.8% of an initial discharge capacity. Therefore, the 18650 cylindrical lithium metal secondary battery in Example 1 of the present invention has good cycling performance.

Besides, as shown in FIG. 6, the cylindrical lithium metal secondary battery with the assembling coefficient of 88.5% according to Example 2 had a first discharge capacity of 3909 mAh. As the number of cycles increased, the discharge capacity was first slightly increased up to 3936 mAh, and then remained at a relatively stable level. After 50 cycles, the discharge capacity remained at 3820 mAh, still maintaining 97.7% of an initial discharge capacity. Therefore, the 18650 cylindrical lithium metal secondary battery in Example 2 of the present invention has good cycling performance.

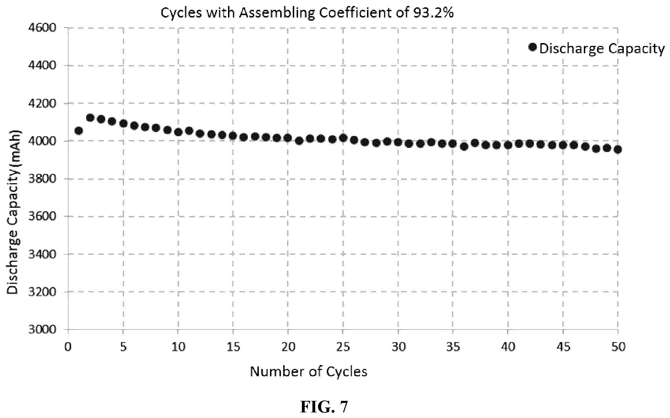

Besides, as shown in FIG. 7, the cylindrical lithium metal secondary battery with the assembling coefficient of 93.2% according to Example 3 had a first discharge capacity of 4055 mAh. As the number of cycles was increased, the discharge capacity was first slightly increased up to 4122 mAh, and then remained at a relatively stable level. After 50 cycles, the discharge capacity remained at 3955 mAh, still maintaining 97.5% of an initial discharge capacity. Therefore, the 18650 cylindrical lithium metal secondary battery in Example 3 of the present invention has good cycling performance.

It can be seen from combination of FIG. 5 to FIG. 7 that the cylindrical lithium metal secondary batteries with the assembling coefficient of 90.5%, 88.5%, and 93.2% have stable charge and discharge performance. It can be seen therefrom that by adopting the assembling coefficient of the present invention as stated above, the stability of charge and discharge cycles of the cylindrical lithium metal secondary battery is further improved without applying an external pressure, so that the testing and operating environments of the battery can be simplified, and thus the operating costs of the battery are reduced, etc. Moreover, the capacity, energy density, and the like of the cylindrical lithium metal secondary battery can also be ensured through the technical solutions of the present invention.

Finally, it should be noted that various examples in the above are merely used for illustrating the technical solutions of the present invention, rather than limiting the present invention; although the detailed description is made to the present invention with reference to various preceding embodiments, those ordinarily skilled in the art should understand that they still could modify the technical solutions described in various preceding embodiments, or make equivalent substitutions to some or all of the technical features therein; and these modifications or substitutions do not make the corresponding technical solutions essentially depart from the scope of technical solutions of various embodiments of the present invention.

### INDUSTRIAL APPLICABILITY

The present invention relates to the technical field of lithium batteries, and particularly to a cylindrical lithium metal secondary battery. The cylindrical lithium metal secondary battery includes: a case, a jelly roll provided in the case and an electrolyte filled in the case, where the jelly roll includes a wound electrode assembly and tabs provided on the wound electrode assembly; the wound electrode assembly is formed by winding a positive electrode, a negative electrode and a separator, where the negative electrode is a metal lithium sheet, and the metal lithium sheet acts as a negative electrode current collector and a negative electrode active material. In the cylindrical lithium metal secondary battery of the present invention, the metal lithium sheet is taken as the negative electrode, and has functions of both an active material and a current collector, so that the common copper current collector is omitted, the inter-separator thickness of the wound electrode assembly is greatly reduced, and the energy density of the battery is greatly improved. Moreover, by using the cylindrical battery structure, stable charge and discharge cycles are realized without applying an external pressure.

Besides, it may be understood that the cylindrical lithium metal secondary battery of the present invention can be reproduced, and can be used in a variety of industrial applications. For example, the cylindrical lithium metal secondary battery of the present invention can be used in the technical field of lithium batteries.

## Claims

1. A cylindrical lithium metal secondary battery, **characterized in that** the cylindrical lithium metal secondary battery comprises: a case, a jelly roll provided in the case and an electrolyte filled in the case, wherein
the jelly roll comprises a wound electrode assembly and tabs provided on the wound electrode assembly;
the wound electrode assembly is formed by winding a positive electrode, a negative electrode and a separator; and
the negative electrode is a metal lithium sheet, wherein the metal lithium sheet acts as a negative electrode current collector and a negative electrode active material.

2. The cylindrical lithium metal secondary battery according to claim 1, wherein an assembling coefficient of the cylindrical lithium metal secondary battery is 88.5%-93.2%.

3. The cylindrical lithium metal secondary battery according to claim 1 or 2, wherein a material of the case is steel.

4. The cylindrical lithium metal secondary battery according to any one of claims 1 to 3, wherein a thickness of the metal lithium sheet is ≤ 50 µm.

5. The cylindrical lithium metal secondary battery according to any one of claims 1 to 4, wherein the tabs comprise a positive electrode tab and a negative electrode tab, wherein the positive electrode tab is an aluminum strip, and the negative electrode tab is a nickel strip.

6. The cylindrical lithium metal secondary battery according to any one of claims 1 to 4, wherein the tabs comprise a positive electrode tab and a negative electrode tab, wherein the positive electrode tab and the negative electrode tab are connected to the positive electrode and the negative electrode, respectively.

7. The cylindrical lithium metal secondary battery according to claim 6, wherein the positive electrode tab is an aluminum strip, and the negative electrode tab is a nickel strip.

8. The cylindrical lithium metal secondary battery according to any one of claims 5 to 7, wherein the positive electrode tab and the negative electrode tab are provided with a high-temperature adhesive tape.

9. The cylindrical lithium metal secondary battery according to claim 8, wherein the cylindrical lithium metal secondary battery further comprises a cap, wherein the cap is provided at an inner top of the case.

10. The cylindrical lithium metal secondary battery according to claim 9, wherein the positive electrode tab is welded to the cap; and the negative electrode tab is welded to an inner bottom of the case.

11. The cylindrical lithium metal secondary battery according to claim 3, wherein the positive electrode comprises a positive electrode current collector and a positive electrode active material layer provided on a surface of the positive electrode current collector; and
a surface density of the positive electrode active material layer is < 40 mg/cm².

12. The cylindrical lithium metal secondary battery according to claim 11, wherein a material of the positive electrode active material layer is formed by mixing an active material, a conductive agent and a binder.

13. The cylindrical lithium metal secondary battery according to claim 11 or 12, wherein the positive electrode current collector is an aluminum foil.

14. The cylindrical lithium metal secondary battery according to any one of claims 11 to 13, wherein the positive electrode active material comprises any one of lithium cobalt oxide, a ternary material and a lithium iron phosphate material.

15. The cylindrical lithium metal secondary battery according to any one of claims 1 to 14, wherein the cylindrical lithium metal secondary battery is any one of 18650 cylindrical battery, 14500 cylindrical battery and 21700 cylindrical battery.

16. The cylindrical lithium metal secondary battery according to claim 15, wherein weight energy density of the cylindrical lithium metal secondary battery is ≥ 380 Wh/kg, volumetric energy density is ≥ 850 Wh/L; and capacity is > 4000 mAh.

17. The cylindrical lithium metal secondary battery according to any one of claims 1 to 16, wherein the separator is a porous polymer separator; and
a thickness of the separator is 20-25 µm.

18. The cylindrical lithium metal secondary battery according to any one of claims 1 to 17, wherein the electrolyte is a liquid organic electrolyte.

19. The cylindrical lithium metal secondary battery according to any one of claims 5 to 7, wherein the jelly roll is provided with an upper insulation spacer and a lower insulation spacer in a top portion and a bottom portion, respectively.

20. The cylindrical lithium metal secondary battery according to claim 19, wherein the upper insulation spacer and the lower insulation spacer are respectively provided with a strip-shaped hole through which the positive electrode tab and the negative electrode tab penetrate.
